# EUROPEAN PATENT APPLICATION

(11) **EP 4 080 193 A1**
(43) Date of publication of application: **26.10.2022**
(21) Application number: 20903933.8
(22) Date of filing: 18.12.2020
(51) Int. Cl.: G01N 21/21, G01N 21/88, G01N 21/958

(54) **METHOD FOR EVALUATING ORIENTATION OF NANOWIRE IN TRANSPARENT MATERIAL, METHOD FOR MANAGING STEPS IN WHICH SAID METHOD IS USED, AND METHOD FOR PRODUCING RESIN CURED ARTICLE**

(30) Priority: 20.12.2019 JP 2019230501
(71) Applicant: Showa Denko K.K., Tokyo 105-8518 (JP)
(72) Inventor: MIYAMURA Yasunao, Tokyo 105-8518 (JP); KADOWAKI Yasushi, Tokyo 105-8518 (JP); YAMATAKE Kuniaki, Tokyo 105-8518 (JP); HARA Masanao, Tokyo 105-8518 (JP); YAMAKI Shigeru, Tokyo 105-8518 (JP); OHATA Hideki, Tokyo 105-8518 (JP)
(74) Representative: Strehl Schübel-Hopf & Partner
(86) International application number: PCT/JP2020/047478
(87) International publication number: WO 2021/125333

(57) **Abstract**

An evaluation method includes a step of disposing a sensitive color plate between two polarization plates disposed in a crossed Nicols shape, a step of disposing a measurement material that is a transparent material containing a nanowire between any of one polarization plate or the other polarization plate of the polarization plates and the sensitive color plate, a step of making white light incident from a side of one of the disposed polarization plates, a step of observing a color of the measurement material from a side of the other polarization plate, and a step of evaluating an orientation direction of the nanowire from the color of the measurement material obtained by observation.

## Description

### [Technical Field]

The present invention relates to a method for evaluating an orientation of a nanowire in a transparent material, a method for managing steps in which said method is used, and a method for producing a resin cured article.

Priority is claimed on Japanese Patent Application No. 2019-230501, filed on December 20, 2019, the content of which is incorporated herein by reference.

### [Background Art]

Nanowires such as silver nanowires or copper nanowires are kneaded, dispersed or the like into a material such as a film, a composite or a gel and used in optical materials represented by, for example, transparent touch panels and the like. As a characteristic that determines the properties of these optical materials and the like, the orientations of the nanowires can be considered. Specific examples of the properties of the optical materials and the like include properties such as mechanical strength, elongation strength, optical anisotropy, birefringence, conductive anisotropy and electrothermal anisotropy. These characteristics are extremely important in the quality inspection of materials.

In analysis of the orientations of the above-described nanowires, it is common to use a method in which the nanowires are directly observed with a microscope and image analysis is performed. A pretreatment of a sample used for the aforementioned method or working of the sample is usually extremely troublesome. In addition, measurement is performed only in an extremely small part of a region in the material, and thus a representative value such as an average value is not necessarily obtained.

In Patent document 1, improvement has been made regarding the aforementioned problems, and a measurement method is disclosed in which a material containing a needle-like substance such as a nanowire is measured by small-angle X-ray scattering and the orientation is obtained from data of the scattering vectors thereof.

Patent document 2 discloses, as an evaluation device of an optical disc substrate or the like, a birefringence evaluation device including an optical source, two polarizers forming a crossed Nicols disposition on an optical path, a sample that is disposed between these two polarizers, and a full-wave plate that is disposed on the optical path where light from the sample is received.

### [Citation List]

### [Patent document]

[Patent document 1]
   Japanese Unexamined Patent Application, First Publication No. 2019-168386
[Patent document 2]
   Japanese Unexamined Patent Application, First Publication No. H10-332533

### [Summary of Invention]

### [Technical Problem]

The method of Patent document 1 enables measurement in a wider range than microscopic methods and thus makes it easy to obtain a representative value. However, in the case of measuring a large-size sample or a liquid sample, it was necessary to take out a part of the sample and install the part in a measuring instrument, which made it difficult to perform measurement in a non-destructive manner. Particularly, in the case of a liquid sample, when a part of the sample is taken out for measurement, this causes the sample to viscously flow, and there are cases where the orientation of the original sample disappears. Additionally, in this measurement method, a certain amount of time is taken for measurement, including time for preparing the measurement sample. Therefore, real-time evaluation was not possible.

First to third aspects of the present invention have been made in consideration of the above-described circumstances, and an objective of the present invention is to provide a method enabling more convenient, non-destructive and real-time evaluation of the orientation of a nanowire in a transparent material.

### [Solution to Problem]

That is, a first aspect of the present invention includes configurations described below.

[1] An evaluation method in which a sensitive color plate method is used, including
   a step of disposing a sensitive color plate between two polarization plates disposed in a crossed Nicols shape,
   a step of disposing a measurement material that is a transparent material containing a nanowire between any of one polarization plate or the other polarization plate of the polarization plates and the sensitive color plate,
   a step of making white light incident from a side of one of the disposed polarization plates,
   a step of observing a color of the measurement material from a side of the other polarization plate and
   a step of evaluating an orientation direction of the nanowire from the color of the measurement material obtained by observation.
   The first aspect of the present invention preferably includes the following characteristics [2] to [8]. Two or more of these characteristics can be preferably combined together.
[2] The evaluation method according to [1], in which the sensitive color plate has a phase difference of 530 to 580 nm.
[3] The evaluation method according to [2], in which, in a case where the observed color of the measurement material is a color in a blue-green to green to yellow-green range, the nanowire in the measurement material is evaluated to be oriented in a fast axis direction of the sensitive color plate.
[4] The evaluation method according to [2], in which, in a case where the observed color of the measurement material is a color in a red to orange range, the nanowire in the measurement material is evaluated to be oriented in a slow axis direction of the sensitive color plate.
[5] The evaluation method according to any one of [1] to [4], in which the measurement material is a plate-like material and is disposed at a tilt with respect to an optical axis of the white light along a slow axis direction of the sensitive color plate as an axis.
[6] The evaluation method according to any one of [1] to [5], in which the nanowire is a silver nanowire.
[7] The evaluation method according to any one of [1] to [6], in which the measurement material is a liquid put into a transparent container.
[8] The evaluation method according to [7], in which the measurement material is a curable resin composition containing a curable resin and a nanowire.
   The second aspect of the present invention is the following method for managing steps.
[9] A method for managing steps including an evaluation step of evaluating the composition by the evaluation method according to [8] before a curing step of the curable resin composition is performed, and a determination step of determining whether or not the curable resin composition will be subsequently moved to the curing step based on a result which is obtained by the evaluation.
   The method for managing steps preferably further includes the curing step of curing the curable resin composition which is determined to be moved to the curing step.
   The third aspect of the present invention is the following production method.
[10] A method for producing a resin cured article including the method for managing steps according to [9].

### [Advantageous Effects of Invention]

It is possible to conveniently evaluate the orientation of a nanowire in a transparent material.

### [Brief Description of Drawings]

Fig. 1 is a schematic view schematically showing the disposition of two polarization plates, a sensitive color plate and a measurement material, and an arrow in the drawing indicates an optical axis direction.
Fig. 2 is a schematic view schematically showing the disposition of two polarization plates, a sensitive color plate and a tilted measurement material.

### [Description of Embodiment]

Hereinafter, an example of an embodiment of the present invention will be described, but the present invention can be appropriately modified and performed within the scope of the gist.

The present embodiment is simply a specific description for better understanding of the gist of the invention and does not limit the present invention unless particularly otherwise specified. Positions, angles, numbers, materials, amounts, configurations and the like can be modified, added, omitted, substituted and the like within the scope of the gist of the present invention.

### (Evaluation method in which sensitive color plate method is used)

A method of the present embodiment is an evaluation method in which a sensitive color plate method is used, in which a sensitive color plate is disposed between two polarization plates disposed in a crossed Nicols shape, furthermore, a measurement material is disposed between any of one polarization plate or the other polarization plate and the sensitive color plate, the measurement material is a transparent material containing a nanowire, and the orientation direction of the nanowire is evaluated from a color of the measurement material that is obtained when white light incident from a side of the one polarization plate is observed on a side of the other polarization plate.

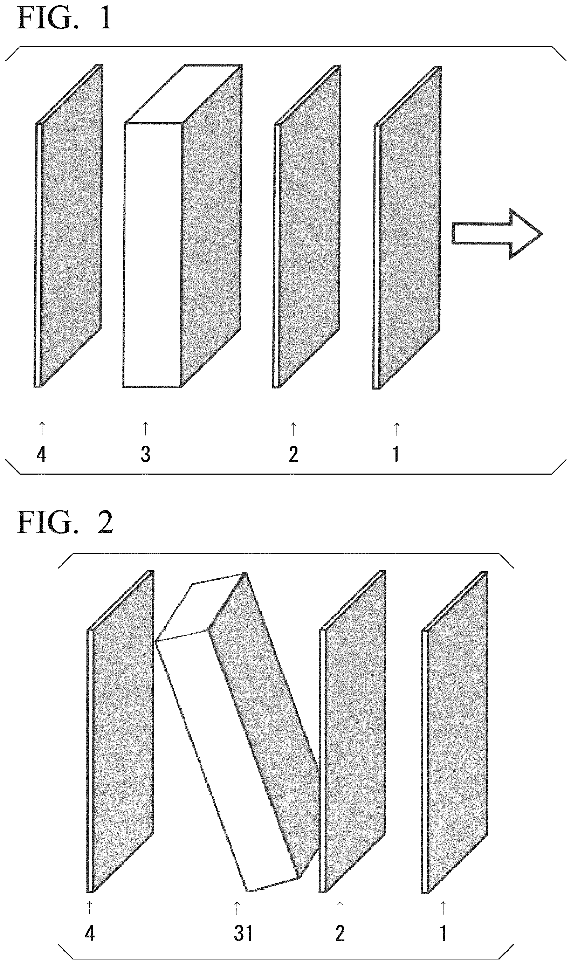

The evaluation method of the present embodiment is an evaluation method in which a sensitive color plate method is used. In the evaluation method of the present embodiment, as shown in Fig. 1, a sensitive color plate 2 is disposed between two polarization plates (Nicols) 1 and 4 disposed in a crossed Nicols shape, and furthermore, a measurement material 3 is disposed between any of one polarization plate 4 or the other polarization plate 1 and the sensitive color plate 2 (hereinafter, such a disposition state will be referred to as the "measurement system" in some cases). The crossed Nicols shape refers to a disposition where the polarization axes of two polarization plates are orthogonal to each other when seen from an optical axis. In this measurement system, the white light incident from the side of the one polarization plate 4 is observed from the side of the other polarization plate 1. In addition, the orientation direction of the nanowire in the measurement material 3 is evaluated from the color of the measurement material 3 that is obtained upon observation. The measurement material 3 is a transparent material containing the nanowire. The transparent material may mean a material that transmits light sufficiently enough to be measured with the measurement system of the present embodiment, and examples of the transparent material include polyvinyl alcohol, poly(N,N-dimethylacrylamide), a poly-N-vinylacetamide and the like, but the transparent material is not limited only to these examples. In a case where the transparent material is a liquid, the transparent material is measured in a state of being contained in a container. The nanowire may mean a rod-like particle having a diameter of less than 1 µm. Examples of the nanowire include metal nanowires such as a silver nanowire. The amount of the nanowire that is contained in the measurement material can be arbitrarily selected and may be, for example, 500 mass ppm to 2000 mass ppm, but the amount is not limited only to this example. Examples of the container include a quartz cell, a glass cell and the like. The polarization plates 1 and 4, the sensitive color plate 2 and the measurement material 3 may be disposed parallel to one another.

The sensitive color plate method is a method in which a sensitive color plate (phase difference plate) is inserted between two polarization plates disposed in a crossed Nicols shape, and a measurement material is disposed between the sensitive color plate and any polarization plate, thereby detecting the birefringence of the measurement material as a color. Ordinarily, in the sensitive color plate method, the two polarization plates and the phase difference plate (sensitive color plate) are disposed perpendicularly to the optical axis of white light incident from a white light source (hereinafter, simply referred to as the "optical axis" in some cases). In a case where the polarization plates are disposed in a crossed Nicols shape, a full-wave plate is used as the phase difference plate. The phase difference plate is used as a sensitive color plate (sensitive plate) by disposing the fast axis (or slow axis) of the phase difference plate to tilt at an angle of 45° with respect to the polarization axes of the polarization plates when seen in the optical axis direction. As the sensitive color plate, normally, a sensitive color plate having a phase difference of 530 to 580 nm is used in order to make it easy to detect a change in color with the naked eye. Hereinafter, unless particularly otherwise described, such a sensitive color plate will be described as a member used for evaluation. In addition, color names will be expressed according to Japanese Industrial Standards JIS Z 8102: 2001. In the case of being observed only with the two polarization plates in a crossed Nicols state, light beams are blocked, and the measurement material is observed in darkness. In addition, the sensitive color plate is a plate that has a fast axis direction and a slow axis direction and exhibits a bright color as an interference color in the case of being disposed between two polarization plates which are combined together in orthogonal positions. When the phase difference changes even slightly, the interference color sensitively changes.

The white light source needs to contain light having a color that is easily differentiated with the sensitive color plate that is used, and examples thereof include sunlight, an incandescent lamp, a fluorescent lamp, an LED lamp and the like. From the viewpoint of avoiding the influence of heat (heat convection in a case where the measurement material is, particularly, a liquid) on the measurement material, a fluorescent lamp or LED lamp containing a small amount of an infrared component, an optical source that has passed through an infrared cut filter or the like is preferable as the white light source.

In the present embodiment, in a case where the color of the measurement material 3 to be observed is blue-green to green to yellow-green, that is, a color in a blue-green to green range or a green to yellow-green range, preferably, in a case where the color is green, the nanowire in the measurement material 3 is evaluated to be oriented in the fast axis direction of the sensitive color plate 2. In addition, in a case where the color of the measurement material 3 to be observed is red to orange, that is, a color in a red to orange range, preferably, in a case where the color is red, the nanowire in the measurement material 3 is evaluated to be oriented in the slow axis direction of the sensitive color plate 2. In a case where the color of the measurement material 3 to be observed is blue to blue-violet, that is, a color in a blue to blue-violet range, preferably, in a case where the color is blue, normally, the orientation of the nanowire in the measurement material 3 is evaluated to be not confirmed, but there is a possibility that the nanowire may be oriented in the optical axis direction.

The use of this sensitive color plate makes it possible to check the orientation direction of the nanowire. For example, the measurement material 3 is relatively rotated with respect to the measurement system (a configuration in which the polarization plates and the sensitive color plate are disposed) around the optical axis as an axis. In addition, the fast axis direction of the sensitive color plate 2 when the observed color of the measurement material 3 that is being rotated has turned green is the orientation direction of the nanowire. The color of the measurement material 3 may be observed with the naked eye, a video camera or the like.

When a measurement material 31 has a plate shape as shown in Fig. 2, the measurement material 31 may be disposed at a tilt with respect to the optical axis along the slow axis direction of the sensitive color plate 2 as an axis. In such a case, the orientation of the nanowire in the thickness direction of the plate-like measurement material 31 can be evaluated.

Unless particularly otherwise described, the orientation direction in the present embodiment is a direction that is two-dimensionally expressed in a plane perpendicular to the optical axis. However, in order to confirm a three-dimensional orientation direction of the nanowire, the orientation direction may be measured in relatively different directions with respect to the measurement material. It is preferable to measure the orientation direction with the optical axes in two different directions set to intersect with each other at a right angle, since it is easy to obtain a three-dimensional orientation direction accurately.

The measurement material 3 is not limited particularly in terms of the shape as long as the measurement material 3 transmits light. Examples of the shape include a plate shape, a quadrangular prism, an irregular shape and the like, but the shape is not limited only to these examples. Even when the measurement material has a large size, the entire measurement material may be evaluated by relatively scanning, that is, relatively moving the measurement system (the configuration in which the polarization plates and the sensitive color plate are disposed) with respect to the measurement material. In addition, the measurement material may be a solid or a liquid. In a case where the measurement material is a liquid, normally, the shape of the measurement material becomes the shape of a container into which the measurement material is to be put.

For example, in a case where the measurement material 3 is a composition containing a nanowire that is to turn into a resin by curing as shown in examples to be described below, the orientation of the nanowire can be evaluated by the method of the present embodiment before, for example, immediately before a curing step of the composition. The expression "immediately before" may mean a state where there is a possibility that the process may subsequently move to the curing step with no steps other than the evaluation step which is inserted before the curing step. The expression "immediately before" may mean, for example, a state where all preparation used for curing has been completed. Based on the evaluation results, it is possible to determine whether or not the process will be subsequently moved to the curing step or whether or not to let time pass or additional working be performed by an arbitrarily-selected method such that the orientation falls into a more desired state. The steps can be managed as described above. When the steps are managed as described above, it is easy to obtain a resin having a stable orientation of a nanowire. An example of the arbitrarily-selected method may be provision of a step of stretching the measurement material after curing.

### [Examples]

Hereinafter, the present invention will be more specifically described with examples and comparative examples, but the present invention is not limited only to the following examples.

### (Example 1)

In the present example, the following operation was repeated five times. That is, the same experiment was repeated five times.

Silver nanowires (average diameter: 28 nm, average length: 20 µm) were mixed with a commercially available UV-curable resin solution (containing an acrylic ultraviolet-curable resin, trade name: LED & UV CRAFT RESIN solution, manufactured by Kiyohara & Co., Ltd.) such that the content of the nanowires reached 0.2 mass%. In addition, this liquid mixture was enclosed and sealed in a quartz cell (inner dimensions: 10 mm in width, 20 mm in height and 1 mm in depth). The silver nanowires used have a property of being easily oriented in the vertical direction when left to stand.

Next, as shown in Fig. 1, two polarization plates 1 and 4 (BSP-200 manufactured by Midtown, the polarization axes were each caused to tilt at angles of 45° from the vertical direction, and disposed in a crossed Nicols shape), a sensitive color plate 2 (MGR570 manufactured by MeCan Imaging Inc., the fast axis was disposed in the vertical direction) and the quartz cell as a measurement material 3 were disposed.

White light was radiated from the polarization plate 4 side, and the color of the measurement material 3 was observed from the polarization plate 1 side. When the color of the entire measurement material 3 turned green (that is, the nanowires were oriented in the vertical direction), the polarization plates 1 and 4 and the sensitive color plate 2 were removed. On the other hand, the quartz cell was left to stand without being moved. As a result of measuring times until the color of the entire measurement material 3 turned green after the measurement material 3 was sealed in the quartz cell, the minimum was 10 minutes, and the maximum was 50 minutes.

Next, ultraviolet rays were radiated from a 10 W UV lamp to the quartz cell in a state where the quartz cell was retained as it was, and the resin was cured. The ultraviolet rays were rapidly radiated after the entire measurement material 3 was confirmed to have turned green. That is, immediately after the material was confirmed to turn green, the curing step was performed. After curing, the removed polarization plates and sensitive color plate were disposed again as before, white light was radiated from the polarization plate 4 side, and the color of the measurement material 3 was observed from the polarization plate 1 side. As a result, the colors of the five obtained measurement materials 3 (cured resins) were all green as a whole.

### (Comparative Example 1)

A liquid mixture was prepared, enclosed and sealed in a quartz cell in the same manner as in Example 1.

After the liquid mixture was sealed in the quartz cell, ultraviolet rays were radiated after 50 minutes had been passed, without evaluating the orientation direction of the nanowire in the middle. The operation was performed under the same conditions as in Example 1 except for the above. Among the five obtained cured resins, the colors of four cured measurement materials 3 were green as a whole, but the color of one cured measurement material 3 was green in a mottled pattern.

### (Comparative Example 2)

A liquid mixture was prepared, enclosed and sealed in a quartz cell in the same manner as in Example 1.

The operation was performed under the same conditions as in Example 1 except that, after the liquid mixture was sealed in the quartz cell, ultraviolet rays were radiated after 70 minutes without evaluating the orientation direction of the nanowire in the middle. Among the five obtained cured resins, the colors of all of the cured measurement materials 3 were green as a whole.

In a method where the measurement material was left to stand for a long period of time as in Comparative Example 2 in order to obtain a stable orientation, the color of all of the cured measurement materials were green. However, a long period of time (70 minutes) was required in each operation for the five samples. In addition, it is considered that, to one of the five measurement materials 3 of Comparative Example 1, ultraviolet rays were radiated in a stage where the orientation was not sufficiently aligned.

On the other hand, in the method of the present invention, the orientation state was evaluated in the middle, and the curing timing was managed, whereby it was possible to shorten (10 to 50 minutes) the time as in Example 1. In addition, as seen in Comparative Example 1, even when a measurement material 3 in which orientations were slowly aligned was contained, it was possible to postpone the curing of the measurement material 3 until the orientations were aligned, and the quality of the obtained product could be improved.

### [Industrial Applicability]

The present invention provides a method enabling more convenient, non-destructive and real-time evaluation of the orientation of a nanowire in a transparent material.

The present invention can be usefully used for the step management or the like of a nanowire-containing material such as a resin.

### [Reference Signs List]

1 Polarization plate (analyzer)
2 Sensitive color plate
3 Measurement material (quartz cell)
4 Polarization plate (polarizer)
31 Measurement material (quartz cell)

## Claims

1. An evaluation method in which a sensitive color plate method is used, comprising:
a step of disposing a sensitive color plate between two polarization plates disposed in a crossed Nicols shape;
a step of disposing a measurement material that is a transparent material containing a nanowire between any of one polarization plate or the other polarization plate of the polarization plates and the sensitive color plate;
a step of making white light incident from a side of one of the disposed polarization plates;
a step of observing a color of the measurement material from a side of the other polarization plate; and
a step of evaluating an orientation direction of the nanowire from the color of the measurement material obtained by observation..

2. The evaluation method according to Claim 1,
wherein the sensitive color plate has a phase difference of 530 to 580 nm.

3. The evaluation method according to Claim 2,
wherein, in a case where the observed color of the measurement material is a color in a blue-green to green to yellow-green range, the nanowire in the measurement material is evaluated to be oriented in a fast axis direction of the sensitive color plate.

4. The evaluation method according to Claim 2,
wherein, in a case where the observed color of the measurement material is a color in a red to orange range, the nanowire in the measurement material is evaluated to be oriented in a slow axis direction of the sensitive color plate.

5. The evaluation method according to any one of Claims 1 to 4,
wherein the measurement material is a plate-like material and is disposed at a tilt with respect to an optical axis of the white light along a slow axis direction of the sensitive color plate as an axis.

6. The evaluation method according to any one of Claims 1 to 5,
wherein the nanowire is a silver nanowire.

7. The evaluation method according to any one of Claims 1 to 6,
wherein the measurement material is a liquid put into a transparent container.

8. The evaluation method according to Claim 7,
wherein the measurement material is a curable resin composition containing a curable resin and a nanowire.

9. A method for managing steps, comprising:
an evaluation step of evaluating the composition by the evaluation method according to Claim 8 before a curing step of the curable resin composition is performed; and
a determination step of determining whether or not the curable resin composition will be subsequently moved to the curing step based on a result which is obtained by the evaluation.

10. The method for managing steps according to Claim 9, further comprising:
the curing step of curing the curable resin composition determined to be moved to the curing step.

11. A method for producing a resin cured article, comprising:
the method for managing steps according to Claim 9 or 10.
